# EUROPÄISCHE PATENTSCHRIFT

(11) **EP 3 314 868 B1**
(45) Veröffentlichungstag und Bekanntmachung des Hinweises auf die Patenterteilung: **03.05.2023**
(21) Anmeldenummer: 16741869.8
(22) Anmeldetag: 24.06.2016
(51) Int. Cl.: H04L 67/12, H04L 67/568

(54) **DATENAUSTAUSCH MIT EINEM LASER ODER EINER WERKZEUGMASCHINE**
EXCHANGING DATA WITH A LASER OR A MACHINE TOOL
ÉCHANGE DE DONNÉES AVEC UN LASER OU UNE MACHINE-OUTIL

(30) Priorität: 29.06.2015 DE 102015212074
(43) Veröffentlichungstag der Anmeldung: 02.05.2018
(73) Patentinhaber: TRUMPF Werkzeugmaschinen SE + Co. KG, 71254 Ditzingen (DE)
(72) Erfinder: BAUER, Klaus, 71254 Ditzingen (DE); BOCK, Hans-Peter, 74321 Bietigheim-Bissingen (DE); GÖRG, Christian, 71696 Möglingen (DE)
(74) Vertreter: Kohler Schmid Möbus Patentanwälte
(86) Internationale Anmeldenummer: PCT/EP2016/064658
(87) Internationale Veröffentlichungsnummer: WO 2017/001295

(56) Entgegenhaltungen:
- EP-A2- 1 429 217
- WO-A2-2006/105567
- DE-A1-102006 006 803
- DE-A1-102011 089 499
- DE-A1-102013 220 865

## Beschreibung

Die Erfindung betrifft ein System und ein Verfahren zum Datenaustausch zwischen mindestens zwei Laser- oder Werkzeugmaschinenvorrichtungen (bzw. mit einer Maschinensteuerung oder einem Steuerungsrechner der Vorrichtung). Bei der Laservorrichtung kann es sich um einen Laser und bei der Werkzeugmaschinenvorrichtung um eine Lasermaschine oder um eine Werkzeugmaschine, wie z.B. eine Stanzmaschine, handeln.

Um Daten zwischen mehreren Laser- oder Werkzeugmaschinenvorrichtungen, zwischen einer solchen Vorrichtung und dem Vorrichtungshersteller oder zwischen einer solchen Vorrichtung und einem mobilen Endgerät (z.B. Smartphone) auszutauschen, sind normalerweise ein gemeinsames Netzwerk und auch ein Server in diesem Netzwerk oder aber ein Zugriff der Vorrichtung auf das Internet notwendig. Da Laser- oder Werkzeugmaschinenvorrichtungen heute größtenteils nicht an ein Netzwerk angeschlossen sind oder nach Anschluss an das Netzwerk eines Vorrichtungsbetreibers nur einen eingeschränkten Zugriff erhalten, bspw. auf Dateiablagen mit Produktionsaufträgen, und somit z.B. nicht miteinander kommunizieren oder auf das Internet zugreifen können, werden einfache Prozesse, wie z.B. Fehlermeldungen, Conditionmonitoring, Statusmeldungen, Updates, etc., und elegante Auswertungen verhindert und machen Serviceeinsätze vor Ort erforderlich.

Einer Laser- oder Werkzeugmaschinenvorrichtung ist es bei fehlender Netzwerk- bzw. Internetanbindung auch nicht möglich, ihren Standort selbstständig zu bestimmen. Ebenso ist es für Vorrichtungen trotz Internetanbindung teilweise ein Problem, die aktuelle Uhrzeit herauszufinden, da Firewalls die Kommunikation mit Zeitservern im Internet verhindern. Aktuelle Standort- und Uhrzeitdaten müssen daher regelmäßig oder bei Änderung von Hand aktualisiert werden.

Um eine zeitgleiche Kommunikation zwischen zwei von räumlich begrenzten Kommunikationsfeldern umgebenen technischen Einrichtungen zu ermöglichen, ist es aus der DE 10 2006 006 803 A1 bekannt, dass ein erstes räumlich begrenztes Kommunikationsfeld von einer ersten technischen Einrichtung erzeugt wird, dass ein zweites räumlich begrenztes Kommunikationsfeld, welches mit dem ersten Kommunikationsfeld einen Überlappungsbereich aufweist, von einer zweiten technischen Einrichtung erzeugt wird, dass das mobile Gerät innerhalb des Überlappungsbereiches positioniert wird und dass mittels des mobilen Gerätes mindestens eine der technischen Einrichtungen als Kommunikationspartner zum selektiven drahtlosen Datenaustausch gewählt wird.

Der vorliegenden Erfindung liegt die Aufgabe zugrunde, ein System und ein Verfahren zum Datenaustausch mit einer Laser- oder Werkzeugmaschinenvorrichtung, die an kein (externes) Netzwerk oder nur an ein Netzwerk, welches keine Verbindung zu anderen Vorrichtungen oder zu bestimmten (externen) Netzwerken zulässt, angeschlossen ist, anzugeben, um dennoch einen Datenaustausch (z.B. Datensynchronisation) mit einer anderen Vorrichtung oder anderen Rechnern/Geräten, zu denen keine direkte Datenverbindung besteht, zu ermöglichen.

Diese Aufgabe wird erfindungsgemäß durch ein System zur Übertragung von Daten mit den Merkmalen von Anspruch 1 gelöst.

Erfindungsgemäß können so Laser- oder Werkzeugmaschinenvorrichtungen, die nie gemeinsam in einem Netzwerk verbunden sind, mithilfe des mobilen Endgeräts miteinander synchronisiert werden. Die von einer ersten Vorrichtung auf das mobile Endgerät heruntergeladenen Daten werden dann später, sobald das mobile Endgerät eine neue Punkt-zu-Punkt-Verbindung mit einer zweiten Vorrichtung aufgebaut hat, von dem mobilen Endgerät weiter an die zweite Vorrichtung übertragen. Dort werden die übertragenen Daten abgeglichen, z.B. wenn die zweite Vorrichtung vom gleichen oder ähnlichen Typ wie die erste Vorrichtung ist und somit Conditionmonitoring-Daten der ersten Vorrichtung zur Verbesserung der Vorrichtungswartung der zweiten Vorrichtung hilfreich wären. Die Synchronisation erfolgt vorteilhaft vollkommen automatisiert und ist trotz fehlender direkter Datenverbindung zwischen den Vorrichtungen sehr aktuell, alleine dadurch, dass Bediener für das Be- und Entladen, Programmieren und sonstige Tätigkeiten des Öfteren zwischen Vorrichtungen wechseln müssen.

Erfindungsgemäß baut ein mobiles Endgerät (Tablet-Computer, Laptop, Smartphone, etc.) nach Betreten des Nahbereichs einer Vorrichtung, die an kein (externes) Netzwerk oder an ein Netzwerk, welches keine Verbindung zu anderen Vorrichtungen oder zu bestimmten (externen) Netzwerken zulässt, angeschlossen ist, eine Punkt-zu-Punkt-Verbindung mit der Vorrichtung auf und lädt entweder Daten von der Vorrichtung herunter oder Daten auf die Vorrichtung hoch. Die Daten werden also per Adhoc-Verbindungen, welche über eine drahtlose Kurzstreckenübertragungsverbindung direkt zwischen dem mobile Endgerät und der Vorrichtung ausgetauscht. Die von der Vorrichtung heruntergeladenen Daten werden im Datenspeicher des mobilen Endgeräts zwischengespeichert und später an die andere Vorrichtung übertragen; die auf die Vorrichtung hochgeladenen Daten waren zuvor an das mobile Endgerät übertragen und dort im Datenspeicher zwischengespeichert worden.

Bei den heruntergeladenen Vorrichtungsdaten handelt es sich insbesondere um Conditionmonitoring-Daten, also um aktuelle Messwerte einer Sensorik, die den Qualitätszustand einer Vorrichtungskomponente (Werkzeuge, Antriebe, Optiken, Prozessgasdüse etc.) überwacht, Fehlermeldungen, Statusmeldungen, Vorrichtungsdatenerfassung (MDE), Betriebsdatenerfassung (BDE) und/oder um Wartungsdaten, wann eine Komponente ausgetauscht wurde bzw. hätte ausgetauscht werden müssen. Die heruntergeladenen Daten können auf dem mobilen Endgerät angezeigt und ausgewertet oder vom mobilen Endgerät über ein Netzwerk (Internet) an den Vorrichtungshersteller zur Auswertung weitergeleitet werden. Bei den hochgeladenen Daten handelt es sich beispielsweise um aktuelle Conditionmonitoring-Daten zur Verbesserung der Vorrichtungswartung, also um aktualisierte Grenzwerte für die Sensorik oder aktualisierte Wartungsintervalle. Die hochzuladenden Daten können beispielsweise vom Vorrichtungshersteller an das mobile Endgerät über ein verbundenes Netzwerk übertragen worden sein.

Die Erfindung hat insbesondere folgende Vorteile:
- Kein Internetzugriff auf und von der Vorrichtung notwendig;
- Keine direkte Vernetzung und Komponenten im Kundennetzwerk notwendig;
- Verbindungen zur Vorrichtung können automatisch und im Hintergrund aufgebaut werden;
- Es können parallel und, wenn gewünscht, ohne Einrichtung Benachrichtigungen von mehreren Vorrichtungen in der Umgebung angezeigt werden;
- Fehler im Kundennetzwerk stören nicht die Kommunikation;
- Es gibt keine Konflikte mit Sicherheitspolicies, die Netzwerkkommunikation betreffen.

Vorzugsweise sind die Kommunikationseinrichtungen der einen Vorrichtung und des mindestens einen mobilen Endgeräts als Bluetooth-Schnittstellen zum Aufbau einer Bluetooth-Verbindung oder als WLAN-Schnittstellen zum Aufbau einer WLAN-Verbindung ausgebildet. Bevorzugt wird Bluetooth LE(LowEnergy) als sehr störungssichere Verbindung verwendet, wobei die Vorrichtung Peripheral und das mobile Endgerät Central ist. Dies bedeutet, dass die Vorrichtung Advertisement Pakete mit einer eindeutigen UUID (Universally Unique Identifier) aussendet und ein mobiles Endgerät sich zu ihr verbinden kann. Eine auf dem mobilen Endgerät installierte App kann dann nach einer Vorrichtung mit dieser UUID suchen. Auf dem mobilen Endgerät ist beispielsweise eine Benachrichtigungs-App installiert, die beim erstmaligen Start die Bluetooth LE Hardware des mobilen Endgeräts aktiviert. Die App registriert sich für Events, sobald die Bluetooth LE Hardware ein Peripheral mit der UUID findet. Wenn das mobile Endgerät sich innerhalb des Empfangsbereichs des Bluetooth der Vorrichtung aufhält und dadurch die Advertisements empfängt, wird die App im Hintergrund aktiviert, und sie verbindet sich dann zur Vorrichtung. Die App bietet die Möglichkeit zur Einstellung, welche Benachrichtigungen empfangen werden sollen, und zur Anzeige von detaillierteren Informationen (aktueller Zustand, Historie, etc.).

Vorzugsweise weisen die Vorrichtungen jeweils einen Datenspeicher zum Speichern der an das mindestens eine mobile Endgerät zu übertragenden Daten auf.

Die Erfindung betrifft in einem weiteren Aspekt auch ein Verfahren zum Datenaustausch zwischen zwei Laser- oder Werkzeugmaschinenvorrichtungen mittels eines mobilen Endgeräts mit den Merkmalen von Anspruch 5. Erfindungsgemäß erfolgt die Datenübertragung zwischen der einen Vorrichtung und dem mobilen Endgerät einerseits und zwischen dem mobilen Endgerät un der anderen Vorrichtung andererseits also stets zeitversetzt.

Erfindungsgemäß können so Vorrichtungen, die nie gemeinsam in einem Netzwerk verbunden sind, mithilfe des mobilen Endgeräts miteinander synchronisiert werden.

Besonders bevorzugt sendet zumindest eine der Vorrichtungen ein drahtloses Signal aus, das insbesondere zum Aufbau der drahtlosen Punkt-zu-Punkt-Verbindung dient, und zumindest eine der lokalen drahtlosen Punkt-zu-Punkt-Verbindungen zwischen der Vorrichtung und dem mobilen Endgerät wird in Abhängigkeit von der am mobilen Endgerät empfangenen Stärke des drahtlosen Signals aufgebaut, wobei die Verbindung insbesondere mit derjenigen Vorrichtung, deren empfangenes Signal am stärksten ist, oder mit derjenigen Vorrichtung, die basierend auf einer Positionsbestimmung durch die Erfassung der Signalstärke von mindestens zwei drahtlosen Signalen dem mobilen Endgerät am nächsten ist, aufgebaut wird. Dadurch ist es möglich, automatisiert Punkt-zu-Punkt-Verbindungen zu trennen und neu aufzubauen, z.B. wenn erkannt wurde, dass eine andere Vorrichtung wesentlich näher ist als die Vorrichtung, die gerade mit dem mobilen Endgerät verbunden ist.

Vorzugsweise werden aktuelle Standortdaten und/oder aktuelle Uhrzeitdaten des mobilen Endgeräts an die mindestens eine Vorrichtung übertragen. Dazu ruft das mobile Endgerät seine Position ab, z.B. durch GPS-Satelliten und/oder den nächsten Mobilfunkmast, und erfährt durch eine Verbindung mit dem Internet, in welchem Land es sich befindet. Wenn sich das mobile Endgerät dann mit einer Vorrichtung verbindet, kann es so der Vorrichtung mitteilen, wo diese sich befindet, so dass die Vorrichtung länderspezifische Einstellungen (z.B. Uhrzeit, Sprache, länderspezifische Normen und Vorgaben) vornehmen kann. Dies ist insbesondere hilfreich, wenn die Vorrichtung gebraucht weiterverkauft wurde und der Vorrichtungshersteller somit keinen Einfluss darauf hat, wo diese aufgestellt wird. So können Komponenten besser betrieben und der manuelle Konfigurationsaufwand verringert werden. Die Übertragung von aktuellen Standort- und Uhrzeitdaten hat insbesondere folgende Vorteile:
- Es sind keine Nutzereingaben notwendig;
- Die Vorrichtung benötigt keine Vernetzung im Kundennetzwerk und auch keinen Internetzugriff;
- Durch den Automatismus ist eine Fehlkonfiguration schwerer möglich;
- Die Vorrichtung erkennt einen Ortswechsel automatisch;
- Dienste auf der Vorrichtung werden selbstständig für den aktuellen Ort lokalisiert;
- Ländereinstellung ist immer korrekt gesetzt.

Alternativen zu Passwörtern zum Authentifizieren an Vorrichtungen (z.B. für den Wechsel des User Levels) bringen oft einen erheblichen Verwaltungsaufwand mit sich, zumal wenn Vorrichtungen nicht regelmäßig Kontakt zu einem zentralen Server aufnehmen (können), um damit eine interne Rechtedatenbank upzudaten. Bei Hardware, wie RFID-Chips, ist es ein logistisches Problem, diese an alle User zu verteilen. Erfindungsgemäß können, insbesondere bei fehlendem oder eingeschränktem Netzwerk- oder Internetzugriff der Vorrichtung, vom mobilen Endgerät Zugangsdaten zum Zertifizieren des mobilen Endgeräts an die Vorrichtung übertragen werden.

Nach Eintritt des mobilen Endgeräts in den Empfangsbereich der Kommunikationseinrichtung einer Vorrichtung wird automatisch die Punkt-zu-Punkt-Verbindung zwischen der Vorrichtung und dem mobilen Endgerät aufgebaut. Nach Aufbau der Punkt-zu-Punkt-Verbindung werden die Daten automatisch zwischen der Vorrichtung und dem mobilen Endgerät übertragen.

Die Erfindung betrifft auch ein Computerprogrammprodukt, insbesondere App zum Laden auf ein mobiles Endgerät, das Codemittel aufweist, die zum Durchführen des erfindungsgemäßen Verfahrens angepasst sind, wenn das Programm auf einem mobilen Endgerät läuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein nicht erfindungsgemäßes System zum Datenaustausch mit einer an kein (externes) Netzwerk angeschlossenen Laservorrichtung oder Werkzeugmaschinenvorrichtung; und
- Fig. 2: ein erfindungsgemäßes System zum Datenaustausch zwischen zwei Laser- oder Werkzeugmaschinenvorrichtungen, die nicht über ein gemeinsames Netzwerk miteinander verbunden sind.

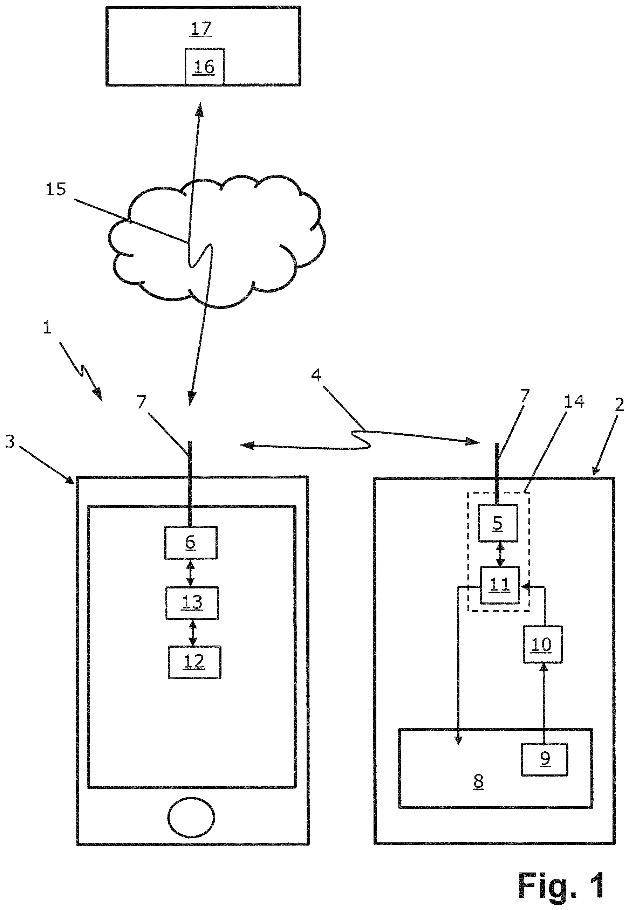

Das in Fig. 1 gezeigte System 1 dient zur Übertragung von Daten zwischen einer Vorrichtung (z.B. Laser oder Werkzeugmaschine) **2,** die an sich isoliert ist und an kein (externes) Netzwerk (Internet) angeschlossen ist, und einem mobilen Endgerät (z.B. Smartphone) **3** über eine lokale drahtlose Punkt-zu-Punkt-Verbindung 4. Zum Aufbau dieser Punkt-zu-Punkt-Verbindung 4 verfügen die Vorrichtung 2 und das mobile Endgerät 3 jeweils über eine Kommunikationseinrichtung 5, 6, die entsprechende Sende/Empfangseinheiten aufweist, wie durch Antennen 7 schematisch angedeutet ist.

Die Vorrichtung 2 umfasst eine - hier lediglich beispielhaft als Teil einer Maschinensteuerung 8 der Vorrichtung 2 dargestellte - Datenquelle 9, die aktuelle Daten, wie z.B. Fehlermeldungen, Conditionmonitoring-Daten, Statusmeldungen, MDE/BDE-Daten etc., generiert, einen Datenspeicher 10, in dem diese Daten gespeichert werden, und eine mit dem Datenspeicher 10 verbundene Datenübertragungssteuerung 11, um über die Kommunikationseinrichtung 5 die im Datenspeicher 10 gespeicherten Daten an ein mobiles Endgerät 3 zu senden oder Daten von einem mobilen Endgerät 3 zu empfangen. Das mobile Endgerät 3 umfasst ebenfalls eine mit einem Datenspeicher 12 verbundene Datenübertragungssteuerung 13, um über die Kommunikationseinrichtung 6 die im Datenspeicher 12 gespeicherten Daten an eine Vorrichtung 2 zu senden oder Daten von einer Vorrichtung 2 zu empfangen. Die Kommunikationseinrichtung 5 und die Datenübertragungssteuerung 11 sind insgesamt als Datenschnittstelle 14 bezeichnet.

Sobald im Datenspeicher 10 der Vorrichtung 2 Daten vorhanden sind, aktiviert die Datenübertragungssteuerung 11 der Vorrichtung 2 die Kommunikationseinrichtung 5, um nach mobilen Endgeräten 3 zu suchen. Wenn sich ein mobiles Endgerät 3 im Empfangsbereich der Vorrichtung 2 befindet, wird eine Punkt-zu-Punkt-Verbindung 4 zwischen ihren Kommunikationseinrichtungen 5, 6 aufgebaut. Dann werden die im Datenspeicher 10 gespeicherten Daten von der Vorrichtung 2 über die Punkt-zu-Punkt-Verbindung 4 an das mobile Endgerät 3 übertragen und dort im Datenspeicher 12 zwischengespeichert. Die übertragenen Daten können auf dem mobilen Endgerät 3 selbst visualisiert und von einer Softwarekomponente ausgewertet werden oder nach Beendigung der Punkt-zu-Punkt-Verbindung 4, also zeitversetzt, vom mobilen Endgerät 3 über eine Internetverbindung 15 weiter an eine externe Datenschnittstelle 16 eines Servers 17 des Vorrichtungsherstellers oder -betreibers übertragen werden, um dort ausgewertet zu werden. Die Auswertung bietet zusätzlich die Möglichkeit, detailliertere Informationen zu der Benachrichtigung, den aktuellen Vorrichtungszustand, eine Historie etc. anzuzeigen.

Sobald im Datenspeicher 12 des mobilen Endgeräts 3 Daten für eine oder mehrere Vorrichtungen 2, z.B. vom Server des Vorrichtungsherstellers oder -betreibers über eine Internetverbindung 15 in den Datenspeicher 12 übertragene Daten, zwischengespeichert sind, aktiviert die Datenübertragungssteuerung 13 des mobilen Endgeräts 3, die Kommunikationseinrichtung 6, um nach entsprechenden Vorrichtungen 2 zu suchen. Wenn sich eine Vorrichtung 2 im Empfangsbereich des mobilen Endgeräts 3 befindet, wird eine Punkt-zu-Punkt-Verbindung 4 zwischen den Kommunikationseinrichtungen 5, 6 aufgebaut. Dann werden die im Datenspeicher 12 zwischengespeicherten Daten vom mobilen Endgerät 3 über die Punkt-zu-Punkt-Verbindung 4 auf die Maschinensteuerung 8 übertragen. Bei den im Datenspeicher 12 gespeicherten Daten kann es sich beispielsweise um NC-Daten handeln, welche per E-Mail angekommen sind, sowie um die Information, für welche Vorrichtung diese verfügbar sein sollen.

Bei einer bestehenden Punkt-zu-Punkt-Verbindung 4 zwischen Vorrichtung 2 und mobilem Endgerät 3 können Daten auch auf Eventbasis übertragen werden. So muss die eine Kommunikationseinrichtung nicht aktiv bei der anderen Kommunikationseinrichtung Daten anfordern, sondern erhält automatisch neue Daten, wenn diese verfügbar sind.

Dieser Datenaustausch zwischen einer an kein Netzwerk angeschlossenen Vorrichtung 2 und einem mobilen Endgerät 3 hat z.B. folgende Vorteile:
- Ersichtlicher Datenschutz bei minimalem Aufbau, da bei der Datenaggregation keine Internetkommunikation notwendig ist;
- Skalierbarer Aufbau ab einer Vorrichtung bis n Vorrichtungen;
- Keine Konfiguration notwendig;
- Keine Probleme durch Fehler im Vorrichtungsbetreiber-Netzwerk.

Als Kommunikationsprotokoll kann beispielsweise Bluetooth LE verwendet werden, wodurch eine einfache Kontaktaufnahme zwischen den Kommunikationseinrichtungen 5, 6 der Vorrichtung 2 und des mobilen Endgeräts 3 gewährt ist. Auf der Vorrichtung 2 kann ein Windows Dienst (BenachrichtigungsManager) aktiv sein, der auf lokale Verbindungen von Benachrichtigungsquellen (z.B. einem Conditionmonitoring-Manager) wartet. Der BenachrichtigungsManager sammelt die Benachrichtigungen und schickt diese an die Bluetooth LE Hardware der Kommunikationseinrichtung 5 der Vorrichtung 2. Sobald eine Benachrichtigungsquelle verbunden ist, aktiviert der BenachrichtigungsManager das Bluetooth Advertisement und wirbt für seine Daten.

Auf dem mobilen Endgerät 3 kann eine Benachrichtigungs-App des Vorrichtungsherstellers installiert sein. Diese aktiviert beim erstmaligen Start die Bluetooth LE Hardware der Kommunikationseinrichtung 6 des mobilen Endgeräts 3. Die App registriert sich für Events, sobald die Bluetooth LE Hardware ein Peripheral mit der UUID des Vorrichtungsherstellers findet. Wenn das mobile Endgerät 3 sich innerhalb des Empfangsbereichs des Bluetooth der Vorrichtung 2 aufhält und dadurch die Advertisements empfängt, wird die App im Hintergrund aktiviert, und sie verbindet sich dann zur Vorrichtung 2. Benachrichtigungen können dann, z.B. über das Notification Center von iOS, als lokale Benachrichtigung dargestellt werden. Die App bietet die Möglichkeit zur Einstellung, welche Benachrichtigungen empfangen werden sollen, und bietet ggf. eine Möglichkeit zur Autorisierung gegenüber der Vorrichtung 2.

Das mobile Endgerät 3 kann in der Regel über Internet auf die lokale Uhrzeit und seinen aktuellen Standort zugreifen. Als Ortsinformation kann eine ungefähre Position mittels GSM, WLAN-Netzwerk oder GPS genutzt werden. Wenn die Vorrichtung 2 ihren aktuellen Standort und die aktuelle Uhrzeit nicht selbstständig bestimmen kann, können diese Daten bei einer bestehenden Punkt-zu-Punkt-Verbindung 4 von dem mobilen Endgerät 3 auf die Vorrichtung 2 übertragen und übernommen werden. Wenn diese Informationen von mehreren mobilen Endgeräten 3 vorhanden sind, können z.B. mittels Mehrheitsentscheid die beste Uhrzeit oder der beste Standort gefunden werden. Dadurch ist es möglich, dass die Vorrichtung immer mit der korrekten länderspezifischen Einstellung betrieben wird (bspw. mit erlaubten WLAN-Kanälen, alternativen Sicherheitseinstellungen).

Das mobile Endgerät 3 kann auch zur Authentifizierung genutzt werden. Dazu bekommt es von einem zentralen Server mit Nutzerverwaltung per Netzwerk (E-Mail, Internet) ein Zertifikat ausgehändigt, mit welchem es sich gegenüber einer Vorrichtung 2 ausweisen kann.

Das mobile Endgerät 3 verfügt über eine Softwarekomponente zur Zertifikatsaktualisierung, die eine Verbindung zu einer zentralen Softwarekomponente zur Zertifikatsausstellung aufbaut. Auf dem mobilen Endgerät 3 sind Zugangsdaten für die Zertifikatsausstellung hinterlegt bzw. werden vom Nutzer abgefragt. Das mobile Endgerät 3 verschickt verschlüsselt die Zugangsdaten und eine ID, welche individuell für die Softwarekomponente und das mobile Endgerät 3 ist, an die Zertifikatsausstellung. Die Zertifikatsausstellung überprüft die Zugangsdaten gegen eine Berechtigungsdatenbank und erstellt, wenn der Nutzer Rechte besitzt, anschließend ein Zertifikat. Das Zertifikat enthält Nutzerdaten, die individuelle ID, die Berechtigungen und ein Ablaufdatum. Dieses Zertifikat wird kryptographisch mit einem privaten Schlüssel signiert. Dieses Zertifikat wird nun verschlüsselt an das mobile Endgerät 3 zurückübertragen und dort in einem Zertifikatspeicher zur späteren Verwendung gespeichert wird.

In der Vorrichtung 2 ist in einem Schlüsselspeicher ein öffentlicher Schlüssel gespeichert, der zusammen mit dem vorher benutzten privaten Schlüssel im zentralen Server ein Schlüsselpaar bildet. Daneben gibt es eine Prüfkomponente, die Zertifikate, welche von der Zertifikatsausstellung erstellt wurden, auf Echtheit prüfen und Freigaben aufgrund von Berechtigungen erteilen kann. Über eine aufgebaute Punkt-zu-Punkt-Verbindung 4 wird das Zertifikat vom mobilen Endgerät 3 an die Vorrichtung 2 übertragen. Danach prüft die Prüfkomponente, ob die Signatur mit dem privaten Schlüssel passend zu seinem öffentlichen Schlüssel erstellt wurde, das Ablaufdatum noch nicht überschritten ist und ob die Berechtigungen auf der Vorrichtung 2 anwendbar sind. Falls dies der Fall ist, wird dem mobilen Endgerät 3 dies signalisiert und ebenso die Berechtigungen mitgeteilt, die ihm zur Verfügung stehen. Das mobile Endgerät 3 kann der Vorrichtung 2 über den gleichen Kommunikationsweg die gewünschte Berechtigung, die gesetzt werden soll, mitteilen.

Diese Authentifizierung eines mobilen Endgeräts 3 an einer an kein Netzwerk angeschlossenen Vorrichtung 2 hat z.B. folgende Vorteile:
- Die Lösung bedarf keiner dezentralen Nutzerverwaltung;
- Die Vorrichtung muss nicht vernetzt sein, um Berechtigungen zu pflegen;
- Vorhandene mobile Endgeräte können dafür verwendet werden;
- Ein Techniker, der Serviceberechtigungen benötigt, benötigt dafür nur einen Benutzeraccount des Vorrichtungsherstellers;
- Das System kann auch dem Vorrichtungsbetreiber zur Nutzung angeboten werden.

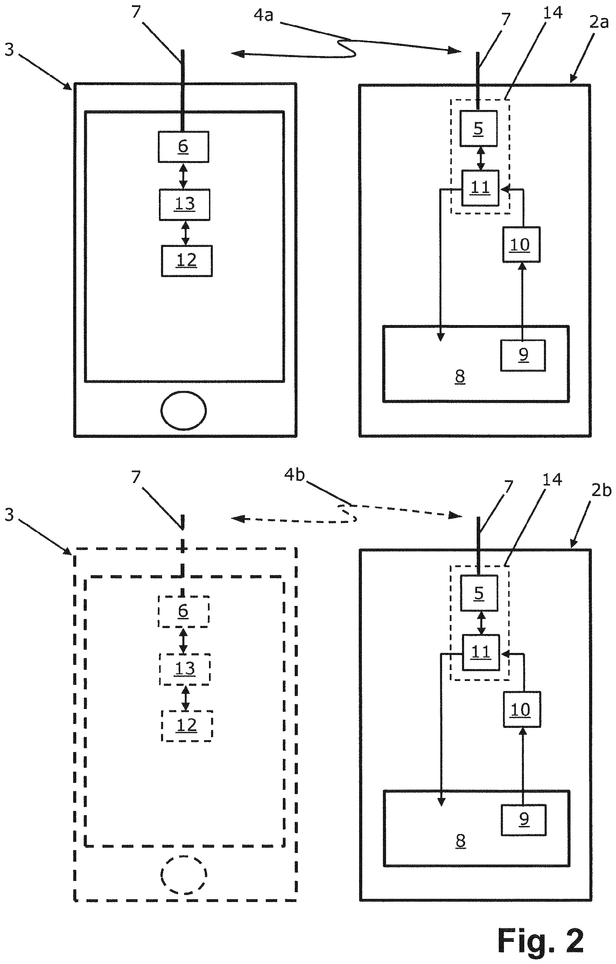

In Fig. 2 ist der Datenaustausch zwischen zwei Vorrichtungen 2a, 2b gezeigt, die nicht über ein gemeinsames Netzwerk miteinander verbunden sind.

Sobald im Datenspeicher 10 der einen, ersten Vorrichtung 2a Daten vorhanden sind, die an die andere, zweite Vorrichtung 2b übertragen werden sollen, aktiviert die Datenübertragungssteuerung 11 der ersten Vorrichtung 2a die Kommunikationseinrichtung 5, um nach mobilen Endgeräten 3 zu suchen. Wenn sich ein mobiles Endgerät 3 im Empfangsbereich der ersten Vorrichtung 2a befindet, wird eine erste Punkt-zu-Punkt-Verbindung 4a zwischen ihren Kommunikationseinrichtungen 5, 6 aufgebaut. Dann werden die im Datenspeicher 10 gespeicherten Daten von der ersten Vorrichtung 2 über die erste Punkt-zu-Punkt-Verbindung 4a an das mobile Endgerät 3 übertragen und dort im Datenspeicher 12 zwischengespeichert. Nach Beendigung der ersten Punkt-zu-Punkt-Verbindung 4a werden die zwischengespeicherten Daten vom mobilen Endgerät 3 über eine zweite lokale drahtlose Punkt-zu-Punkt-Verbindung 4b an die zweite Vorrichtung 2b bzw. an deren für die erste Vorrichtung 2a externe Datenschnittstelle 14 übertragen.

Um automatisiert Punkt-zu-Punkt-Verbindungen 4a, 4b trennen und neu aufbauen zu können, z.B. wenn erkannt wurde, dass eine andere Vorrichtung wesentlich näher ist als die Vorrichtung, die gerade mit dem mobilen Endgerät verbunden ist, können die beiden Vorrichtungen 2a, 2b jeweils ein drahtloses Signal aussenden, das zum Aufbau der drahtlosen Punkt-zu-Punkt-Verbindung 4a, 4b dient. Zumindest eine der lokalen drahtlosen Punkt-zu-Punkt-Verbindungen 4a, 4b zwischen einer der Vorrichtungen 2a, 2b und dem mobilen Endgerät 3 kann dann in Abhängigkeit von der am mobilen Endgerät 3 empfangenen Stärke des drahtlosen Signals aufgebaut werden. Dabei wird die Verbindung bevorzugt mit derjenigen Vorrichtung 2a, 2b, deren empfangenes Signal am stärksten ist, oder mit derjenigen Vorrichtung 2a, 2b, die basierend auf einer Positionsbestimmung durch die Erfassung der Signalstärke von mindestens zwei drahtlosen Signalen dem mobilen Endgerät 3 am nächsten ist, aufgebaut. Bei der zweiten Variante kann es sich um das sogenannte Indoor Positioning System (IPS) handeln, bei dem Räume kartographiert und die Position im Raum durch die Erfassung der Signalstärke von Sendern mit bekannten Positionen bestimmen wird.

## Patentansprüche

1. System (1) zur Übertragung von Daten zwischen mindestens zwei Laser- oder Werkzeugmaschinenvorrichtungen (2a, 2b), die nicht über ein gemeinsames Netzwerk miteinander verbunden sind, umfassend
mindestens zwei Laser- oder Werkzeugmaschinenvorrichtungen (2a, 2b), die zum Aufbau einer lokalen drahtlosen Punkt-zu-Punkt-Verbindung jeweils eine Kommunikationseinrichtung (5) mit einer Datenschnittstelle (14) aufweisen, und
mindestens ein mit mindestens einer der Datenschnittstellen (14) verbindbares mobiles Endgerät (3), das einen Datenspeicher (12) und eine Kommunikationseinrichtung (6) zum Aufbau einer lokalen drahtlosen Punkt-zu-Punkt-Verbindung aufweist,
wobei die eine, erste Vorrichtung (2a) ausgebildet ist, Daten von der Datenschnittstelle (14) der ersten Vorrichtung (2a) über eine erste lokale drahtlose Punkt-zu-Punkt-Verbindung (4a) an das mobile Endgerät (3) zu übertragen, und das mobile Endgerät (3) ausgebildet ist, die von der ersten Vorrichtung (2a) übertragenen Daten in dem Datenspeicher (12) zwischenzuspeichern und über eine zweite lokale drahtlose Punkt-zu-Punkt-Verbindung (4b) an die Datenschnittstelle (14) der zweiten Vorrichtung (2b) zu übertragen, ,
**dadurch gekennzeichnet,**
**dass** die Vorrichtungen (2a, 2b) jeweils ausgebildet sind, nach Eintritt des mobilen Endgeräts (3) in den Empfangsbereich der ersten Vorrichtung (2a, 2b) automatisch die Punkt-zu-Punkt-Verbindung (4a, 4b) zwischen der ersten Vorrichtung (2a, 2b) und dem mobilen Endgerät (3) aufzubauen und nach Aufbau der Punkt-zu-Punkt-Verbindung (4a, 4b) zwischen der ersten Vorrichtung (2a, 2b) und dem mobilen Endgerät (3) die Daten automatisch zu übertragen, und dass das mobile Endgerät (3) ausgebildet ist, die zwischengespeicherten Daten nach Beendigung der ersten Punkt-zu-Punkt-Verbindung (4a) dann später, sobald das mobile Endgerät (3) eine neue, zweite lokale drahtlose Punkt-zu-Punkt-Verbindung (4b) mit der zweiten Vorrichtung (2b) aufgebaut hat, über die zweite lokale drahtlose Punkt-zu-Punkt-Verbindung (4b) an die Datenschnittstelle (14) der zweiten Vorrichtung (2b) zu übertragen.

2. System nach Anspruch 1, **dadurch gekennzeichnet, dass** die Kommunikationseinrichtungen (5, 6) der ersten und/oder zweiten Vorrichtung (2a, 2b) und des mindestens einen mobilen Endgeräts (3) als Bluetooth-Schnittstellen zum Aufbau einer Bluetooth-Verbindung oder als WLAN-Schnittstellen zum Aufbau einer WLAN-Verbindung ausgebildet sind.

3. System nach einem der vorhergehenden Ansprüche, **dadurch gekennzeichnet, dass** die Vorrichtungen (2a, 2b) jeweils einen Datenspeicher (10) zum Speichern der an das mindestens eine mobile Endgerät (3) zu übertragenden Daten aufweisen.

4. System nach einem der vorhergehenden Ansprüche, **dadurch gekennzeichnet, dass** die übertragenen Daten Benachrichtigungsdaten und Update-Daten umfassen.

5. Verfahren zum Datenaustausch zwischen mindestens zwei Laser- oder Werkzeugmaschinenvorrichtungen ( 2a, 2b), die nicht über ein gemeinsames Netzwerk miteinander verbunden sind und die zum Aufbau einer lokalen drahtlosen Punkt-zu-Punkt-Verbindung jeweils eine Kommunikationseinrichtung (5) mit einer Datenschnittstelle (14) aufweisen, mittels eines mobilen Endgeräts (3),
wobei der Datenaustausch von der einen, ersten Vorrichtung (2a) an die andere, zweite Vorrichtung (2b) folgende Verfahrensschritte umfasst:
- Aufbauen einer ersten lokalen drahtlosen Punkt-zu-Punkt-Verbindung (4a) zwischen der ersten Vorrichtung (2a) und dem mobilen Endgerät (3), Übertragen von Daten von der Datenschnittstelle (14) der ersten Vorrichtung (2a) an das mobile Endgerät (3) über die aufgebaute erste Verbindung (4a) und Zwischenspeichern der übertragenen Daten im mobilen Endgerät (3), und
- Aufbauen einer zweiten lokalen drahtlosen Punkt-zu-Punkt-Verbindung (4b) zwischen der zweiten Vorrichtung (2b) und dem mobilen Endgerät (3) und Übertragen der im mobilen Endgerät (3) zwischengespeicherten Daten vom mobilen Endgerät (3) über die aufgebaute zweite Verbindung (4b) an die Datenschnittstelle (14) der zweiten Vorrichtung (2b) und Beenden der zweiten Verbindung (4b),
**dadurch gekennzeichnet,**
**dass** nach Eintritt des mobilen Endgeräts (3) in den Empfangsbereich der ersten Vorrichtung (2a, 2b) automatisch die Punkt-zu-Punkt-Verbindung (4a, 4b) zwischen der ersten Vorrichtung (2a, 2b) und dem mobilen Endgerät (3) aufgebaut wird und nach Aufbau der Punkt-zu-Punkt-Verbindung (4a, 4b) zwischen der ersten Vorrichtung (2a, 2b) und dem mobilen Endgerät (3) die Daten automatisch übertragen werden und dass erst nach Beenden der ersten Verbindung (4a) die zweite Verbindung (4b) aufgebaut und die im mobilen Endgerät (3) zwischengespeicherten Daten über die aufgebaute zweite Verbindung (4b) von dem mobilen Endgerät (3) an die zweite Vorrichtung (2b) übertragen werden.

6. Verfahren nach Anspruch 5, **dadurch gekennzeichnet, dass** zumindest eine der Vorrichtungen (2a, 2b) ein drahtloses Signal aussendet, das insbesondere zum Aufbau der entsprechenden drahtlosen Punkt-zu-Punkt-Verbindung (4a, 4b) dient, und zumindest eine der lokalen drahtlosen Punkt-zu-Punkt-Verbindungen (4a, 4b) zwischen der Vorrichtung (2a, 2b) und dem mobilen Endgerät (3) in Abhängigkeit von der am mobilen Endgerät (3) empfangenen Stärke des drahtlosen Signals aufgebaut wird.

7. Verfahren nach Anspruch 6, **dadurch gekennzeichnet, dass** die Punkt-zu-Punkt-Verbindung (4a, 4b) mit derjenigen Vorrichtung (2a, 2b), deren empfangenes Signal am stärksten ist, oder mit derjenigen Vorrichtung (2a, 2b), die basierend auf einer Positionsbestimmung durch die Erfassung der Signalstärke von mindestens zwei drahtlosen Signalen dem mobilen Endgerät (3) am nächsten ist, aufgebaut wird.

8. Verfahren nach einem der Ansprüche 5 bis 7, **dadurch gekennzeichnet, dass** über die lokale Punkt-zu-Punkt-Verbindung (4a, 4b) Benachrichtigungsdaten der Vorrichtung (2a, 2b) an das mobile Endgerät (3) und Updatedaten des mobilen Endgeräts (3) an die Vorrichtung (2a, 2b) übertragen werden.

9. Verfahren nach einem der Ansprüche 5 bis 8, **dadurch gekennzeichnet, dass** aktuelle Standortdaten und/oder aktuelle Uhrzeitdaten des mobilen Endgeräts (3) an mindestens eine Vorrichtung (2a, 2b) übertragen werden.

10. Verfahren nach einem der Ansprüche 5 bis 9, **dadurch gekennzeichnet, dass** vom mobilen Endgerät (3) Zugangsdaten zum Zertifizieren des mobilen Endgeräts (3) an mindestens eine der ersten oder zweiten Vorrichtung (2a, 2b) übertragen werden.

11. Computerprogrammprodukt, insbesondere App zum Laden auf ein mobiles Endgerät (3), das Codemittel aufweist, die zum Durchführen des Verfahrens nach einem der Ansprüche 5 bis 10 angepasst sind, wenn das Programm auf einem mobilen Endgerät (3) läuft.

## Claims

1. A system (1) for transmitting data between at least two laser or machine tool apparatuses (2a, 2b), which are not connected to one another via a common network, comprising
at least two laser or machine tool apparatuses (2a, 2b) each comprising a communication device (5) with a data interface (14) for setting up a local wireless point-to-point connection, and
at least one mobile terminal (3) that is connectable to at least one of the data interfaces (14) and that has a data memory (12) and a communication device (6) for setting up a local wireless point-to-point connection,
wherein the one, first apparatus (2a) is configured to transmit data from the data interface (14) of the first apparatus (2a) via a first local wireless point-to-point connection (4a) to the mobile terminal (3), and the mobile terminal (3) is configured to buffer-store the data transmitted by the first apparatus (2a) in the data memory (12) and transmit them via a second local wireless point-to-point connection (4b) to the data interface (14) of the second apparatus (2b),
**characterized in that**
the apparatuses (2a, 2b) are each configured to set up automatically the point-to-point connection (4a, 4b) between the first apparatus (2a, 2b) and the mobile terminal (3) after entry of the mobile terminal (3) into the reception area of the first apparatus (2a, 2b), and after setting up the point-to-point connection (4a, 4b) between the first apparatus (2a, 2b) and the mobile terminal (3) to automatically transmit the data, and that the mobile terminal (3) is configured to transmit the buffer-stored data via the second local wireless point-to-point connection (4b) to the data interface (14) of the second apparatus (2b) after termination of the first point-to-point connection (4a) later as soon as the mobile terminal (3) has set up a new, second local wireless point-to-point connection (4b) with the second apparatus (2b).

2. The system as claimed in claim 1, **characterized in that** the communication devices (5, 6) of the first and/or second apparatus (2a, 2b) and of the at least one mobile terminal (3) are configured as Bluetooth interfaces for setting up a Bluetooth connection or as WLAN interfaces for setting up a WLAN connection.

3. The system as claimed in one of the preceding claims, **characterized in that** the apparatuses (2a, 2b) each have a data memory (10) for storing the data to be transmitted to the at least one mobile terminal (3).

4. The system as claimed in one of the preceding claims, **characterized in that** the transmitted data comprise notification data and update data.

5. A method for data interchange between at least two laser or machine tool apparatuses (2a, 2b), which are not connected to one another via a common network and comprise each a communication device (5) with a data interface (14) for setting up a local wireless point-to-point connection, by means of a mobile terminal (3),
wherein the data interchange from the one, first apparatus (2a) to the other, second apparatus (2b) comprises the following method steps:
- setting up a first local wireless point-to-point connection (4a) between the first apparatus (2a) and the mobile terminal (3), transmitting data from the data interface (14) of the first apparatus (2a) to the mobile terminal (3) via the set-up first connection (4a) and buffer-storing of the transmitted data in the mobile terminal (3), and
- setting up a second local wireless point-to-point connection (4b) between the second apparatus (2b) and the mobile terminal (3) and transmitting the data buffer-stored in the mobile terminal (3) from the mobile terminal (3) via the set-up second connection (4b) to the data interface (14) of the second apparatus (2b) and terminating the second connection (4b),
**characterized in that**
after entry of the mobile terminal (3) into the reception area of the first apparatus (2a, 2b), the point-to-point connection (4a, 4b) between the first apparatus (2a, 2b) and the mobile terminal (3) is set up automatically and after the set-up of the point-to-point connection (4a, 4b) between the first apparatus (2a, 2b) and the mobile terminal (3), the data are automatically transmitted and only after termination of the first connection (4a), the second connection (4b) is set up and the data buffer-stored in the mobile terminal (3) are transmitted from the mobile terminal (3) to the second apparatus (2b) via the set-up second connection (4b).

6. The method as claimed in claim 5, **characterized in that** at least one of the apparatuses (2a, 2b) transmits a wireless signal that is used particularly for setting up the corresponding wireless point-to-point connection (4a, 4b), and at least one of the local wireless point-to-point connections (4a, 4b) between the apparatus (2a, 2b) and the mobile terminal (3) is set up on the basis of the strength of the wireless signal as received at the mobile terminal (3).

7. The method as claimed in claim 6, **characterized in that** the point-to-point connection (4a, 4b) is set up to that apparatus (2a, 2b) whose received signal is strongest or to that apparatus (2a, 2b) that is closest to the mobile terminal (3) based on position determination by sensing the signal strength of at least two wireless signals.

8. The method as claimed in one of claims 5 to 7, **characterized in that**, via the local point-to-point connection (4a, 4b), notification data of the apparatus (2a, 2b) are transmitted to the mobile terminal (3) and update data of the mobile terminal (3) are transmitted to the apparatus (2a, 2b).

9. The method as claimed in one of claims 5 to 8, **characterized in that** current location data and/or current time data of the mobile terminal (3) are transmitted to at least one apparatus (2a, 2b).

10. The method as claimed in one of claims 5 to 9, **characterized in that** access data for certifying the mobile terminal (3) are transmitted to at least one of the first or second apparatus (2a, 2b) via the mobile terminal (3).

11. A computer program product, particularly an app for loading onto a mobile terminal (3), that has code means that are adapted to perform the method as claimed in one of claims 5 to 10 when the program runs on a mobile terminal (3).

## Revendications

1. Système (1) de transmission de données entre au moins deux dispositifs laser ou de machine-outil (2a, 2b) qui ne sont pas reliés entre eux par un réseau commun, comprenant :
au moins deux dispositifs laser ou de machine-outil (2a, 2b) qui présentent chacun un dispositif de communication (5) avec une interface de données (14) pour établir une liaison point à point locale sans fil, et
au moins un terminal mobile (3) pouvant être relié à au moins une des interfaces de données (14), qui présente une mémoire de données (12) et un dispositif de communication (6) pour établir une liaison point à point locale sans fil,
le premier dispositif (2a) étant conçu pour transmettre des données depuis l'interface de données (14) du premier dispositif (2a) vers le terminal mobile (3) par l'intermédiaire d'une première liaison point à point locale sans fil (4a), et le terminal mobile (3) est conçu pour mettre en mémoire tampon les données transmises depuis le premier dispositif (2a) dans la mémoire de données (12) et les transmettre à l'interface de données (14) du second dispositif (2b) par l'intermédiaire d'une seconde liaison point à point locale sans fil (4b),
**caractérisé en ce que**
les dispositifs (2a, 2b) sont respectivement conçus pour établir automatiquement la liaison point à point (4a, 4b) entre le premier dispositif (2a, 2b) et le terminal mobile (3) après l'entrée du terminal mobile (3) dans la zone de réception du premier dispositif (2a, 2b) et pour transmettre automatiquement les données après l'établissement de la liaison point à point (4a, 4b) entre le premier dispositif (2a, 2b) et le terminal mobile (3), et **en ce que** le terminal mobile (3) est conçu pour transmettre les données mises en mémoire tampon à l'interface de données (14) du second dispositif (2b) après l'achèvement de la première liaison point à point (4a), une fois que le terminal mobile (3) a établi une nouvelle seconde liaison point à point locale sans fil (4b) avec le second dispositif (2b), par l'intermédiaire de la seconde liaison point à point locale sans fil (4b).

2. Système selon la revendication 1, **caractérisé en ce que** les dispositifs de communication (5, 6) du premier et/ou du second dispositif (2a, 2b) et du au moins un terminal mobile (3) sont réalisés sous forme d'interfaces Bluetooth pour établir une liaison Bluetooth ou sous forme d'interfaces WLAN pour établir une liaison WLAN.

3. Système selon l'une quelconque des revendications précédentes, **caractérisé en ce que** les dispositifs (2a, 2b) présentent chacun une mémoire de données (10) pour stocker les données à transmettre au au moins un terminal mobile (3).

4. Système selon l'une quelconque des revendications précédentes, **caractérisé en ce que** les données transmises comprennent des données de notification et des données de mise à jour.

5. Procédé d'échange de données entre au moins deux dispositifs laser ou de machine-outil (2a, 2b) qui ne sont pas reliés entre eux par un réseau commun et qui présentent chacun un dispositif de communication (5) avec une interface de données (14) pour établir une liaison point à point locale sans fil, au moyen d'un terminal mobile (3),
dans lequel l'échange de données d'un premier dispositif (2a) à l'autre second dispositif (2b) comprend les étapes de procédé suivantes consistant à :
- établir une première liaison point à point locale sans fil (4a) entre le premier dispositif (2a) et le terminal mobile (3), transmettre des données de l'interface de données (14) du premier dispositif (2a) au terminal mobile (3) par l'intermédiaire de la première liaison établie (4a) et mettre en mémoire tampon les données transmises dans le terminal mobile (3), et
- établir une seconde liaison point à point locale sans fil (4b) entre le second dispositif (2b) et le terminal mobile (3) et transmettre les données mises en mémoire tampon dans le terminal mobile (3) du terminal mobile (3) à l'interface de données (14) du second dispositif (2b) par l'intermédiaire de la seconde liaison établie (4b), et mettre fin à la seconde liaison (4b),
**caractérisé en ce que**
après l'entrée du terminal mobile (3) dans la zone de réception du premier dispositif (2a, 2b), la liaison point à point (4a, 4b) entre le premier dispositif (2a, 2b) et le terminal mobile (3) est établie automatiquement et, après l'établissement de la liaison point à point (4a, 4b) entre le premier dispositif (2a, 2b) et le terminal mobile (3), les données sont transmises automatiquement et la seconde liaison (4b) est établie seulement après la fin de la première liaison (4a), et les données mises en mémoire tampon dans le terminal mobile (3) sont transmises au second dispositif (2b) par l'intermédiaire de la seconde liaison (4b) établie à partir du terminal mobile (3).

6. Procédé selon la revendication 5, **caractérisé en ce qu'**au moins l'un des dispositifs (2a, 2b) émet un signal sans fil qui sert notamment à établir la liaison point à point sans fil (4a, 4b) correspondante, et au moins l'une des liaisons point à point locales sans fil (4a, 4b) entre le dispositif (2a, 2b) et le terminal mobile (3) est établie en fonction de l'intensité du signal sans fil reçu sur le terminal mobile (3).

7. Procédé selon la revendication 6, **caractérisé en ce que** la liaison point à point (4a, 4b) est établie avec le dispositif (2a, 2b) dont le signal reçu est le plus fort ou avec le dispositif (2a, 2b) qui est le plus proche du terminal mobile (3) sur la base d'une détermination de position par la détection de l'intensité du signal d'au moins deux signaux sans fil.

8. Procédé selon l'une quelconque des revendications 5 à 7, **caractérisé en ce que** des données de notification du dispositif (2a, 2b) sont transmises au terminal mobile (3) par l'intermédiaire de la liaison point à point locale (4a, 4b) et des données de mise à jour du terminal mobile (3) sont transmises au dispositif (2a, 2b).

9. Procédé selon l'une quelconque des revendications 5 à 8, **caractérisé en ce que** des données actuelles de localisation et/ou des données actuelles d'heure du terminal mobile (3) sont transmises à au moins un dispositif (2a, 2b).

10. Procédé selon l'une quelconque des revendications 5 à 9, **caractérisé en ce que** des données d'accès pour la certification du terminal mobile (3) sont transmises par le terminal mobile (3) à au moins l'un des premier ou second dispositifs (2a, 2b).

11. Produit de programme informatique, en particulier application à charger sur un terminal mobile (3), comprenant des moyens de code qui sont adaptés pour mettre en oeuvre le procédé selon l'une quelconque des revendications 5 à 10 lorsque le programme est exécuté sur un terminal mobile (3).
